# EUROPÄISCHE PATENTANMELDUNG

(11) **EP 0 658 784 A2**
(43) Veröffentlichungstag der Anmeldung: **21.06.1995**
(21) Anmeldenummer: 95103073.3
(22) Anmeldetag: 14.01.1992
(51) Int. Cl.: G02B 6/30, G02B 6/42

(54) **Optoelektronisches Bauelement zum Ein- und Auskoppeln von Strahlung**

(30) Priorität: 08.02.1991 DE 4103930
(62) Teilanmeldung aus: 92100524.5
(71) Anmelder: SIEMENS AKTIENGESELLSCHAFT, D-80333 München (DE)
(72) Erfinder: Stegmüller, Bernhard, Dr., Ing., D-86163 Augsburg (DE); Franz, Gerhard, Dr., Dipl.-Chem., D-81543 München (DE); Heinen, Jochen, Dr., Ing., D-85540 Haar (DE)

(57) **Zusammenfassung**

Optoelektronisches Bauelement zur Aus- und Einkopplung von Strahlung aus einem Wellenleiter (2) über einen Spiegel (3) durch das Substrat (1), bei dem in die dem Wellenleiter (2) gegenüberliegende Oberfläche (18) des Substrates (1) eine plankonvexe Linse (4) integriert ist.

## Beschreibung

Die vorliegende Erfindung betrifft ein optoelektronisches Bauelement zum Aus- und Einkoppeln von in einem Wellenleiter geführter Strahlung.

Licht wird in optoelektronischen Bauelementen (OEDs) entweder als Signalträger oder als Energieträger genutzt. Um Signale bzw. Energie zwischen verschiedenen Elementen austauschen zu können, muß Licht transportiert werden. Dazu ist eine Kopplung zwischen Sender und Empfänger notwendig. Diese kann entweder über Wellenleiter (Glasfasern) oder durch den Raum (ohne Wellenleiter) erfolgen. In jedem Fall aber muß Licht aus dem elektronischen Bauelement aus- bzw. eingekoppelt werden.

Eine Kopplung der Strahlung durch das Substrat hindurch ist bei OEDs dann möglich, wenn dieses Substrat für das abgestrahlte Licht transparent ist. Für GaAs- und InP-Substrat muß die Vakuum-Wellenlänge größer als 0,9 µm sein, für Si-Substrate größer als 1,1 µm. Bei einer Anordnung, bei der Licht durch das Substrat gekoppelt wird, können die elektronische und optische Kopplung auf zwei getrennte Ebenen verteilt werden.
Es ist in diesem Fall auch nicht notwendig, das Licht durch Wellenleiter an den Rand des Substrates zu führen. Daher erreicht man eine größere Freiheit in der Anordnung der OEDs.

Voraussetzung für eine Auftrennung der elektrischen von der optischen Kopplung ist es, daß eine Technik zur Verfügung gestellt wird, die sicherstellt, daß das Licht unter einem genau definierten Winkel das Substrat verläßt. Sonst entstehen starke Verluste an Lichtleistung, die durch individuelle Montage des einzelnen OEDs verringert werden müßten. Der eingangs erwähnte Vorteil ginge damit verloren. Da während des Herstellungsprozesses eines jeden OEDs mehrfach die Orientierung von Kristallebenen ausgenutzt wird, weil die ausgenutzten Effekte davon abhängen, bietet sich zur Definition dieses Austrittswinkels die Richtung senkrecht zum Wellenleiter an. Um Licht derartig auszukoppeln, kann eine verteilte Rückkopplung entlang des Wellenleiters mit Hilfe eines DBR-Gitters Verwendung finden. Für eine Kopplung zwischen einem OED und einer Lichtleitfaser ist es jedoch günstiger, wenn die transversale elektromagnetische Feldverteilung des senkrecht zum Wellenleiter abgestrahlten Lichtes maßgeblich von den Führungseigenschaften des Wellenleiters bestimmt wird. In diesem Fall muß der Strahl an einem Spiegel mit einem Neigungswinkel zum Wellenleiter von exakt 45° umgelenkt werden. An diesen Spiegel wird außerdem die Anforderung großer Glätte gestellt, d. h. die Rauhigkeit der Spiegeloberfläche muß klein gegenüber der Wellenlänge der Strahlung sein. Im optische Sinne sehr glatte Spiegel sind bisher nur durch Spiegelbrechen sowie Trocken- und anschließendes Naßätzen realisierbar. Während das Spiegelbrechen in dieser Richtung, d. h. in 45° zum Wellenleiter, aus kristallographischen Gründen unmöglich ist, bleibt als Möglichkeit nur das Ätzen. Trockenätzen ist meist unabhängig von der Kristallorientierung möglich, liefert allerdings aufgerauhte Spiegel, so daß eine Nachbehandlung mit einem Ätzschritt erforderlich ist. Naßätzen selbst gelingt meist, wie Brechen, eigentlich nur entlang kristallographisch ausgezeichneter Ebenen bzw. Richtungen.

Nach Austritt des Lichtes aus dem Substrat findet aufgrund von Beugungserscheinungen eine starke Aufweitung des Lichtstrahles statt. Dem begegnet man in der herkömmlichen Technologie dadurch, daß das Licht durch eine der Lichtleitfaser vorgesetzte Kugellinse gebündelt wird. Die Anordnung umfaßt daher aufeinanderfolgend das OED, eine Kugellinse und die Lichtleitfaser.

Die Kopplung der optischen Energie erfolgt bei OEDs im allgemeinen in Richtung zum Wellenleiter durch optische Spiegel, die orthogonal zu diesem angeordnet sind. Senkrecht zur Wellenführung wird bisher mit Hilfe eines DBR-Gitters aufgrund verteilter Rückkopplung oder eines um 45° zur Wellenführung geneigten Spiegels ausgekoppelt. Vergleiche hierzu Z.L.Liau, J.N.Walpole, L.J.Missaggia, and D.E.Mull "InGaAsP/InP buried-heterostructure surface-emitting diode laser with monolithic integrated bifocal microlens" Appl. Phys. Lett. 56, 1219 - 1221, (1990); Z.L.Liau and J.N.Walpole: "Surface-emitting GaInAsP/InP laser with low threshold current and high efficiency" Appl. Phys. Lett. 46, 115 - 117, (1985); J.N.Walpole: "R&D on Surface-Emitting Diode Lasers", Laser Focus/Electro-Optics, 66 - 74, (1987); H.Saito and Y.Noguchi "Reflection-Type Surface-Emitting 1.3 µm InGaAsP/InP Laser Array with Microcoated Reflector" Japn. Journal Appl. Phys. 28, L1239-L1241 (1989); M.Mihara: "New Surface-Emitting Laser Diode Connects to Optical Fiber Directly", JEE, Hi-Tech Report, 74-77, (1989); J.P.Donnelly, R.J. Bailey, C.A.Wang, G.A.Simpson, K.Rauschenbach: "Hybrid approach to two-dimensional surface-emitting diodes laser arrays" Appl. Phys. Lett. 53, 938 - 940, (1988); K.Iga, F.Koyama, and S.Kinoshita: "Surface-Emitting Semiconductor Lasers" IEEE Journ. Quantum Electron. QE-24, 1845-1855, (1988).

Bei diesen bekannten Anordnungen erfolgt die Auskopplung mit Ausnahme der Veröffentlichung von Z.L.Liau e. a. nicht durch das Substrat. Bei der zitierten Ausnahme gehört das Volumen des Substrates zum Resonanzraum des Lasers. Die Resonanzbedingung des Lasers wird hier durch einen Spiegel orthogonal zum aktiven Wellenleiter und durch die spiegelnde Substratunterseite bestimmt. Um Laserbetrieb zu ermöglichen und dabei Licht auszukoppeln, muß bei dieser Anordnung die effektive Reflexion der Substratunterseite durch eine Metallbeschichtung erhöht werden, die sich jedoch nur teilweise über die Linse erstreckt. In der Mitte der Linse besitzt die Metallbeschichtung eine runde Öffnung. Die runde Oberfläche der integrierten Linse wird durch Ätzen von mehreren konzentrischen Mesas und anschließendes Abrunden der Mesastufen mit Hilfe von Massentransport erreicht.

Auf ähnliche Art und Weise wird auch der zum Wellenleiter um 45° geneigte Spiegel hergestellt (s. Z.L.Liau und J.N.Walpole).

Aufgabe der vorliegenden Erfindung ist es, einen einfach herstellbaren Aufbau für ein optoelektronisches Bauelement zum Aus- und Einkoppeln von Strahlung anzugeben, das außerdem eine möglichst flexible Anordnung mit anderen optischen oder optoelektronischen Bauelementen ermöglicht.

Diese Aufgabe wird mit dem optoelektronischen Bauelement (OED) mit den Merkmalen des Anspruches 1 gelöst. Weitere Ausgestaltungen ergeben sich aus den Unteransprüchen.

Bei der vorliegenden Erfindung wird die Strahlung unter 45° aus einer Wellenleiterschicht in das Substrat hinein reflektiert. Auf der dem Wellenleiter gegenüberliegenden Oberfläche des Substrates wird in dem Material des Substrates eine plankonvexe Linse zur Bündelung der Strahlung ausgebildet. Bei dem erfindungsgemäßen Aufbau ist daher die Linse in das Substrats des OEDs integriert, wodurch ein Arbeitsschritt bei der Herstellung in Richtung zur Planartechnologie verschoben wird. Wegen des gegenüber Quarz höheren Brechungsindex des III-V-Halbleitermateriales reicht für die gleiche Bündelungswirkung der Linse ein größerer Krümmungsradius aus als bei den bekannten Anordnungen.

Es folgt eine Beschreibung des erfindungsgemäßen Aufbaus anhand der Figuren 1 bis 4.
- Fig. 1: zeigt ein erfindungsgemäßes OED im Längsschnitt.
- Fig. 2: zeigt eine alternative Ausgestaltung des erfindungsgemäßen OEDs im Längsschnitt.
- Fig. 3: zeigt eine um ein Subsubstrat erweiterte Anordnung des erfindungsgemäßen OEDs im Längsschnitt.
- Fig. 4: zeigt eine Alternative zu der Anordnung von Fig. 3 mit einer angekoppelten Lichtleitfaser im Längsschnitt.

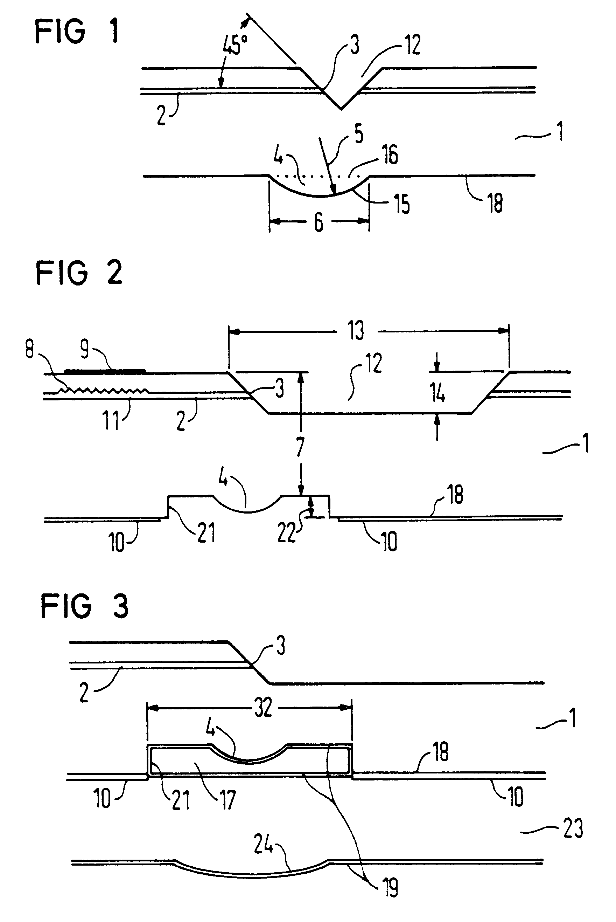

In Fig. 1 ist ein Wellenleiter 2 auf einem Substrat 1 (z. B. InP) eingezeichnet. In die Oberfläche des Bauelementes ist ein V-förmiger Graben geätzt. Die Flanke dieses Grabens begrenzt den Wellenleiter 2 in Längsrichtung und bildet an dem Ende des Wellenleiters einen um 45° gegenüber der Längsrichtung geneigten Spiegel 3. Auf der dem Wellenleiter 2 gegenüberliegenden Oberfläche 18 des Substrates 1 ist die Linse 4 als Bestandteil des Substrates ausgebildet. Diese Linse 4 wird durch eine konvexe Oberfläche 15 an der Außenseite des Substrates und eine gedachte planare Grenzfläche 16 im Substrat 1 gebildet. Der Durchmesser 6 der Linse 4 kann zwischen 5 µm und 350 µm variieren. Dementsprechend variiert auch der Krümmungsradius 5. Die Linse wird durch Trockenätzverfahren (reaktives Ionenätzen (RIE) oder (reaktives) Ionenstrahlätzen (R)IBE) hergestellt. Die Oberfläche der Linse, d. h. die konvexe Oberfläche 15 kann mit dielektrischen Schichten (z. B. Al₂O₃, SiO₂) entspiegelt sein.

Fig. 2 zeigt einen gegenüber der Anordnung von Fig. 1 verbesserten Aufbau, bei dem die Linse 4 in einem Rücksprung 21 (recess) in der dem Wellenleiter 2 abgewandten Oberfläche 18 des Substrates 1 angeordnet ist. Auf diese Weise wird erreicht, daß die Oberfläche der Linse nicht über den planaren Anteil dieser Oberfläche 18 des Substrates hinausragt. Außerdem kann der in Fig. 2 eingezeichnete Abstand 7 durch die Tiefe 22 dieses Rücksprungs 21 festgelegt werden. Der Spiegel 3 wird durch Ätzen eines V-förmigen Grabens 12 hergestellt.
Dieser Graben 12 wird durch Ionenstrahlätzen oder durch naßchemisches Ätzen oder durch Ionenstrahlätzen mit anschließendem naßchemischen Ätzen hergestellt. Ebenfalls möglich ist die Anwendung von reaktivem Ionenstrahlätzen in einer schrägen Einfallsrichtung (angled RIBE), bei dem das Substrat gekippt ist, um den erforderlichen Einfallswinkel zu erreichen. Die erzielte Form ist die in Fig. 2 dargestellte, wobei die Breite 13 des Grabens größer ist als die Tiefe 14 des Grabens, die ihrerseits zwischen 1 µm und 5 µm liegt. Der Abstand 7 beträgt 20 µm bis 200 µm. Die Dicke des Substrates 1 ist kleiner als 200 µm. In dem vorliegenden Ausführungsbeispiel ist in dem Wellenleiter 2 eine aktive Zone 11 vorgesehen, in die über die eingezeichneten Kontakte 9, 10 ein Strom eingespeist werden kann. Für die Anregung von Laserstrahlung ist ein DFB-Gitter 8 vorhanden. Die in diesem DFB-Laser erzeugte Strahlung wird durch das Substrat über den Spiegel 3 ausgekoppelt. An den Wellenleiter 2 kann ein Empfänger angekoppelt werden, der das durch diese Anordnung gesandte Licht detektiert. Das Licht kann in eine weitere erfindungsgemäße Anordnung eingekoppelt werden.

In Fig. 3 ist ein weiteres Ausführungsbeispiel gezeigt, bei dem das OED auf einem weiteren Träger, im folgenden als Subsubstrat bezeichnet, angeordnet ist. Dieses Subsubstrat 23 kann z. B. aus Silizium bestehen. Die Oberfläche des Subsubstrates 23 kann eben sein oder auch weitere integrierte plankonvexe Linsen enthalten. Die Herstellung dieser Linsen erfolgt entsprechend wie bei III-V-Materialien; es müssen lediglich andere Ätzgase verwendet werden. Eine Linse 24, die im Subsubstrat 23 integriert ist, kann entweder wie in Fig. 3 eingezeichnet auf der dem Substrat 1 abgewandten Seite vorhanden sein oder auf der dem Substrat 1 zugewandten Seite oder auf beiden Seiten. In Fig. 3 weist das Substrat 1 einen Rücksprung 21 wie in Fig. 2 auf. Der Durchmesser 32 dieses Rücksprunges ist etwa 50 µm größer als der Durchmesser 6 der Linse. Die Oberflächen des Substrates 1 und des Subsubstrates 23 in diesem Rücksprung 21 sind mit Entspiegelungsschichten 19 versehen. Der Zwischenraum 17 kann z. B. mit reflexionsmindernden Materialien gefüllt sein. Der Zwischenraum 17 kann auch einfach Luft enthalten. Die mit der Linse 24 versehene von dem Substrat 1 abgewandte Oberfläche des Subsubstrates 23 ist ebenfalls mit einer Entspiegelungsschicht 19 bedeckt.

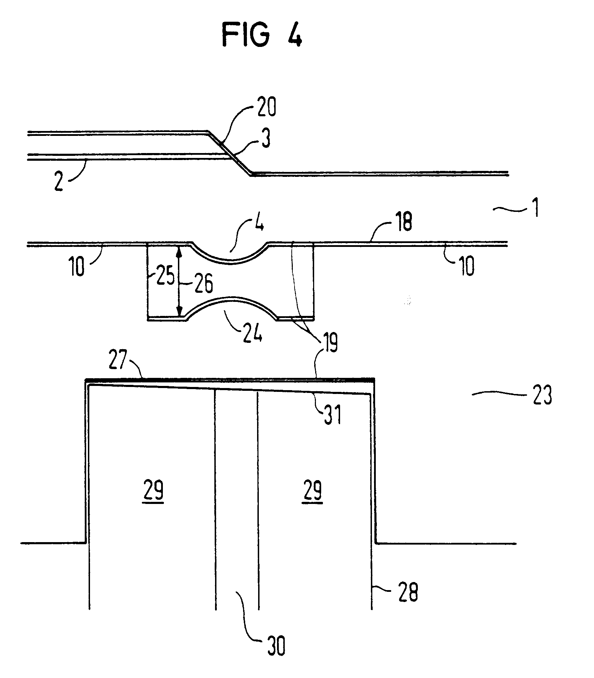

In das Subsubstrat 23 aus Silizium kann eine Lichtleitfaser 28 eingepaßt werden, deren Stirnfläche eben senkrecht oder schräg zur Strahlrichtung sein kann. In Fig. 4 ist eine Linse 24 in einem Rücksprung 25 des Subsubstrats 23 eingezeichnet. Die Tiefe 26 dieses Rücksprunges 25 ist für das Vorhandensein einer Linse 4 im Substrat und einer Linse 24 im Subsubstrat 23 ausreichend groß bemessen. Auf der überwachsenen Oberseite des Substrates 1 befindet sich eine dielektrische Schutzschicht 20.
Die Linsen 4, 24 sind mit Entspiegelungsschichten 19 versehen.
Auf der dem Substrat 1 abgewandten Seite des Subsubstrates 23 ist eine Aussparung zur Aufnahme der Lichtleitfaser 28 vorhanden. Diese Aussparung bildet den Koppelbereich 27 für die Faser und ist ebenfalls mit einer Entspiegelungsschicht 19 bedeckt. Die Faser besteht aus Fasermantel 29 und Faserkern 30, der in der Verlängerung des Strahlengangs des aus dem Substrat 1 austretenden Lichtes angeordnet ist. Die Stirnfläche dieser Lichtleitfaser kann eben senkrecht oder schräg zur Strahlrichtung liegen. Für die Stirnfläche dieser Lichtleitfaser ist auch eine taper-förmige Gestalt möglich, d. h. die Stirnfläche ist linsenartig vorgewölbt oder konisch spitz zulaufend.

Durch eine reproduzierbare Ätztechnik ist eine exakte geometrische, d. h. insbesondere optische Anpassung des Spiegels 3, der Linse 4 im Substrat 1 und der Lichtleitfaser 28 gegebenenfalls über weitere, in das Subsubstrat 23 eingebaute Linsen 24 möglich. Für mehrfach auf einem Wafer angeordnete identische erfindungsgemäße Anordnungen genügt bei der Herstellung ein Justiervorgang. Anschließend können die Bauelemente vereinzelt werden.

Der erfindungsgemäße Aufbau des optoelektronischen Bauelementes hat insbesondere folgende Vorteile: Es kann ein DFB-Gitter oder DBR-Gitter Verwendung finden. Es sind daher keine den Resonator des Wellenleiters begrenzende Spiegel des Fabry-Perot-Typs erforderlich. Es ist auch keine gesonderte Verspiegelung des die Reflexion der Strahlung um 45° bewirkenden Spiegels 3 erforderlich. Die einzige Bedingung ist, daß an dieser Endfläche des Wellenleiters eine Totalreflexion unter 45° erfolgt. Die Herstellung des Spiegels 3 durch Naßätzen ist einfach durchführbar und erzeugt sehr glatte Flächen, so daß keine Verschlechterung des Fernfeldverhaltens auftritt.
Das OED kann auf einem Träger aus Silizium aufgebaut werden, wodurch die Möglichkeit eröffnet ist, ein achromatisches Linsensystem zu verwenden.
Die Herstellung einer integrierten konvexen Linse in Planartechnik durch Trockenätzung gelingt reproduzierbar und ist ein unkritisches Verfahren. Darüber hinaus ist es auch möglich, die Linse in einem Rücksprung (recess) des Substrates zu versenken und damit zu schützen.

## Patentansprüche

1. Optoelektronisches Bauelement, bestehend aus:
einem Substrat (1),
einem Wellenleiter (2), der sich an einer Oberfläche des Substrats (1) befindet,
einem ebenen Spiegel (3), der diesen Wellenleiter (2) in einer Richtung begrenzt und der so um 45° gegenüber dem Wellenleiter (2) geneigt ist, daß in dem Wellenleiter (2) geführte Strahlung senkrecht zu der einen Oberfläche in das Substrat (1) reflektiert wird, und
einer plankonvexen Linse (4), die in die der einen Oberfläche gegenüberliegende andere Oberfläche (18) des Substrats (1) integriert ist,
**dadurch gekennzeichnet,**
daß in dem Wellenleiter (2) eine aktive Zone (11), für die Kontakte (9, 10) zum Anlegen eines Stroms vorhanden sind, zur Strahlungserzeugung vorgesehen ist, und
daß in der aktiven Zone (11) ein DFB-Gitter (8) oder DBR-Gitter für die Anregung von Laserstrahlung vorgesehen ist.

2. Optoelektronisches Bauelement nach Anspruch 1,
**dadurch gekennzeichnet,**
daß das Substrat (1) mit der die Linse (4) aufweisenden anderen Oberfläche (18) auf einem Subsubstrat (23) befestigt ist, und
daß in die dem Substrat (1) zugewandte Oberfläche des Subsubstrats (23) eine weitere Linse (24) integriert ist.

3. Optoelektronisches Bauelement nach Anspruch 2 oder 2, bei dem das Substrat (1) mit der die Linse (4) aufweisenden anderen Oberfläche (18) auf einem Subsubstrat (23) befestigt ist.

4. Optoelektronisches Bauelement nach Anspruch 3, bei dem das Substrat (1) aus III-V-Material und das Subsubstrat (23) aus Silizium besteht.

5. Optoelektronisches Bauelement nach Anspruch 3 oder 4, bei dem in die dem Substrat (1) zugewandte Oberfläche des Subsubstrats (23) eine Linse (24) integriert ist.

6. Optoelektronisches Bauelement nach einem der vorhergehenden Ansprüche, bei dem die dem Substrat (1) zugewandte Oberfläche (18) des Subsubstrats (23) im Bereich einer Linse (4, 24) einen Rücksprung (25) aufweist.

7. Optoelektronisches Bauelement nach einem der vorhergehenden Ansprüche, bei dem in der dem Substrat (1) abgewandten Oberfläche des Subsubstrats (23) ein Koppelbereich (27) für den Anschluß einer Lichtleitfaser vorhanden ist.

8. Optoelektronisches Bauelement nach einem der vorhergehenden Ansprüche, bei dem der Spiegel (3) durch einen V-förmigen Graben (12) definiert ist.

9. Anordnung aus mehreren optoelektronischen Bauelementen nach einem der Ansprüche 1 bis 8 auf einem gemeinsamen Chip.
